# EUROPEAN PATENT APPLICATION

(11) **EP 1 939 772 A1**
(43) Date of publication of application: **02.07.2008**
(21) Application number: 06292062.4
(22) Date of filing: 28.12.2006
(51) Int. Cl.: G06F 17/50

(54) **Method and a computer program product for computer aided design of a product comprising a set of constrained objects**

(71) Applicant: Dassault Systèmes, 92156 Suresnes Cedex (FR)
(72) Inventor: Lechine, Emmanuel, 75010 Paris (FR)
(74) Representative: Hirsch & Associés

(57) **Abstract**

The invention is directed to a method of computer aided design of a product comprising a set of objects (91, 92), said method comprising a step of:
- identifying (S10) constraints (1000) linking objects of said set of objects, each of said constraints being oriented from a first object (92) to a second object (91) so as to ensure, upon solving (S90) the constraints, that the first object (92) is not moved provided that all other of said constraints are solved,

the method further comprising a step of:
- modifying the orientation of one (1000) of the constraints, upon user action.

The invention further proposes a computer-readable product and computer system comprising means designed for implementing the steps of the method according to the invention.

## Description

The invention relates to the field of computer programs and systems, and more specifically to a method of computer aided design of a product comprising a set of modeled objects, wherein said objects are linked by constraints.

Computer-aided techniques include Computer-Aided Design or CAD, which relates to software solutions for authoring product design. Similarly, CAE is an acronym for Computer-Aided Engineering, e.g. it relates to software solutions for simulating the physical behavior of a future product. CAM stands for Computer-Aided Manufacturing and typically includes software solutions for defining manufacturing processes and operations.

A number of systems and programs are offered on the market for the design of objects (or parts) or assemblies of objects, forming a product, such as the one provided by Dassault Systemes under the trademark CATIA. These CAD systems allow a user to construct and manipulate complex three dimensional (3D) models of objects or assemblies of objects. CAD systems thus provide a representation of modeled objects using edges or lines, in certain cases with faces. Lines or edges may be represented in various manners, e.g. non-uniform rational B-splines (NURBS). These CAD systems manage parts or assemblies of parts as modeled objects, which are essentially specifications of geometry. Specifically, CAD files contain specifications, from which geometry is generated, which in turn allow for a representation to be generated. Specifications, geometry and representation may be stored in a single CAD file or multiple ones. CAD systems include graphic tools for representing the modeled objects to the designers; these tools are dedicated to the display of complex objects - the typical size of a file representing an object in a CAD system being in the range of one Megabyte per part, and an assembly may comprise thousands of parts. A CAD system manages models of objects, which are stored in electronic files.

In computer-aided techniques, the graphical user interface (GUI) plays an important role as regards the efficiency of the technique.

Also known are Product Lifecycle Management (PLM) solutions, which refer to a business strategy that helps companies to share product data, apply common processes, and leverage corporate knowledge for the development of products from conception to the end of their life, across the concept of extended enterprise. By including the actors (company departments, business partners, suppliers, Original Equipment Manufacturers (OEM), and customers), PLM may allow this network to operate as a single entity to conceptualize, design, build, and support products and processes.

Some PLM solutions make it for instance possible to design and develop products by creating digital mockups (a 3D graphical model of a product). For instance, the digital product may be first defined and simulated using an appropriate application. Then, the lean digital manufacturing processes may be defined and modeled.

The PLM solution provided by Dassault Systemes (under the trademarks CATIA, ENOVIA and DELMIA) provides an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service. Such PLM solutions comprise a relational database of products. The database comprises a set of textual data and relations between the data. Data typically include technical data related to the products said data being ordered in a hierarchy of data and are indexed to be searchable. The data are representative of the modeled objects, which are often modeled products and processes.

Product lifecycle information, including product configuration, process knowledge and resources information are typically intended to be edited in a collaborative way.

Amongst other features, modeling a product in CAD applications often requires defining not only the geometric objects which are parts of the product, but also the functional dependences between the said objects. This is usually achieved with the help of constraints. A constraint (e.g. a geometric constraint) is a relation among geometric objects that should be satisfied. For example, one may require that a first object is located at a given distance (offset) from a second object.

This way of designing is actually far from the usual procedural way of "thinking" of computers. In contrast with a procedural approach, a declarative description of geometry is much closer to human.

Recent geometric modelers offer a solution to this problem. The geometry can be described by defining constraints among geometric elements. Thanks to a constraint solver, the designer only specifies object shape and size in a declarative way, and the system takes care of making the drawing in accordance to the specification. The user specifies *what* to draw and *not how* to draw it.

In a number of existing CAD computer-based methods implementing constraints, the constraints are grouped in a network and solved all at the same time, using e.g. variational techniques. A variational solver processes the constraints without the need of arranging them in a predefined order. The declarative nature of constraints and e.g. the variational approach of solving make that all components of the system are treated on a same footing.

One also knows CAD softwares based on methods implementing oriented constraints, wherein said orientations are frozen, e.g. in connection with the relative order allocated when positioning the constrained objects. Allocating a relative order is similar in spirit to procedural schemes. With such methods, however, a user cannot simply change the collaborative scheme. For example, an administrator will have to edit the administrative structure of the whole product in order to reconfigure the structure of the collaborative scheme. Now, editing the product structure can be cumbersome for products comprising thousands of parts (said parts being e.g. objects), which may further have complicated names etc. Such steps are time consuming.

Therefore, there is a need for a method of computer aided design of a product comprising a set of objects linked by constraints, said method allowing for an easy modification of the structure of a product. The method should preferably be user-friendly.

In addition, another problem inherent to methods implementing oriented constraints is that such methods suppose that a relative order in positioning objects can be allocated. Now, this cannot be always achieved. For some product configurations, this can even be impossible. Thus, the known technologies of oriented constraints are not suitable for given products. At least, the number of possible combinations of objects/parts (e.g. the mechanical scenarios) is reduced compared with methods using non-oriented constraints. Hence, in addition to the above requirement (easy modification of the product structure), the method should preferably allow for increasing the possibilities of combinations of parts, compared with oriented-constraints-based solutions.

In one embodiment, the invention therefore provides a method of computer aided design of a product comprising a set of objects, said method comprising steps of:
- identifying constraints linking objects of said set of objects, each of said constraints being oriented from a first object to a second object so as to ensure, upon solving the constraints, that the first object is not moved provided that all other of said constraints are solved;
- displaying within a graphical user interface of a computer system said oriented constraints;
the method further comprising steps of:
- receiving a user selection and request for modification of the orientation of the displayed oriented constraint; and
- modifying the orientation of one of the constraints, according to the user request.

In other embodiments, the method according to the invention may comprise one or more of the following features:
- the step of modifying the orientation comprises transforming said one of the constraints into a non-oriented constraint;
- the step of modifying the orientation comprises inverting the orientation of said one of the constraints;
- the method further comprises, after the step of modifying, steps of: finding a sequential order in solving said constraints, according to the constraints as modified after the step of modifying; and solving the constraints according to the sequential order;
- the step of finding a sequential order uses a graph;
- the method further comprises steps of: if an impossibility of solving said constraints is detected, testing whether said constraints can be solved upon modifying one oriented constraint amongst the constraints as modified; and returning a suggestion for modifying said one oriented constraint;
- the step of returning a suggestion further comprises: highlighting in the graphical user interface a symbol representative of said one oriented constraint;
- the method further comprises, at the step of displaying: displaying within the graphical user interface said oriented constraints and the set of objects as symbols, wherein the selection of one of said oriented constraints or one of a respectively linked first object or second object allows for modifying the constraints;
- the graphical user interface is further adapted to display a 3D representation of the set of objects;
- the constraints identified at the step of identifying further comprises at least one non-oriented constraint;
- the method further comprises, at the step of testing, recursively ignoring the orientation of the oriented constraints as modified;
- the step of testing further comprises choosing said one oriented constraint according to one criterion; and
- said criterion is the least relative displacement of the objects of the set.

The invention further proposes a computer-readable product for computer aided design of a product comprising a set of objects, the product comprising code means designed for implementing the steps of the method according to the invention.

The invention still concerns a computer system for computer aided design of a product comprising a set of objects, the system comprising means designed for implementing the steps of the method according to the invention.

A system embodying the invention will now be described, by way of nonlimiting examples, and in reference to the accompanying drawings, wherein:
- FIG. 1A is an example of screenshot of a graphical user interface of CAD system, which represents a view of objects linked by oriented constraints;
- FIG. 1B is an example of a screenshot representing a modal window for assisting the user in modifying a constraint, according to an embodiment of the invention;
- FIG. 2 is a flowchart representing steps for solving an hybrid network of constraints;
- FIG. 3 is an example of a screenshot of a view of parts linked by both oriented and non-oriented constraints;
- FIG. 4 is an example of a screenshot of a CAD system display representing the view of FIG. 3, wherein some of the constraints have been modified upon user action;
- FIGS. 5 and 6 illustrate schematically a user request for changing an offset value in a constraint by a user;
- FIG. 7 is an example of a screenshot representing a modal window assisting the user in solving the network of constraints of FIG. 6; and
- FIG. 8 shows the network of constraints of FIG. 7, after solving.

As to summarize the invention, it is proposed a method of computer aided design of a product comprising a set of objects. First, constraints linking objects of the set are identified. Each of said constraints is oriented (or directed) from a first object to a second object, so as to ensure, upon solving the constraints, that the first object is not moved provided that all other of said constraints are solved. Making use of oriented constraints allows for preventing possible conflicts inherent to collaborative work. The method further comprises steps of: displaying said oriented constraints within a graphical user interface. Typically, constraints and objects are displayed as intelligible 3D representations, easily graspable in the view, and possibly user-selectable. Then, the method comprises receiving a user selection and request for modification of the orientation of one of the displayed oriented constraint; and modifying said constraint accordingly. Amongst other applications, this makes it possible to easily modify the product structure (this notably bypasses edition of the administrative structure of the product).

In an embodiment, if an impossibility of solving the constraints (as modified) is detected, the method tests whether said constraints can be solved upon modifying one oriented constraint amongst said constraints. A modification of the constraint may for example consist in temporarily ignoring the orientation thereof. Accordingly, a suggestion for modifying said one oriented constraint is returned to the user. The user is thus prompted to the problem, which he/she can solve efficiently (in practice, a simple validation of the suggestion is sufficient).

In one of the variants discussed in details below, the constraints initially identified may further comprise one or more non-oriented constraints. Accordingly, the number of possible combinations of parts is increased compared with networks of oriented constraints only, notably when the system considered is under-constrained.

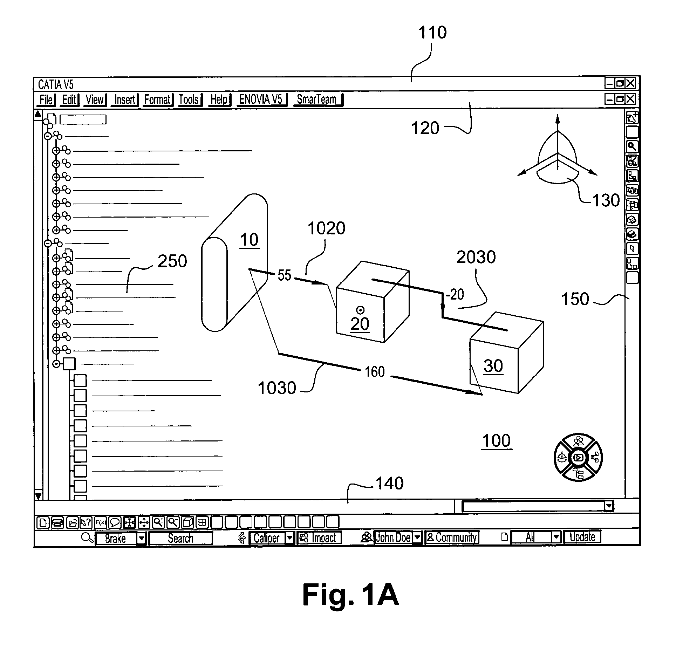

Going now into details: as to make more explicit what an oriented constraint is, FIG. 1A shows an example of a screenshot of a graphical user interface (or GUI) 100 of CAD system, which represents a view of objects 10, 20, 30 linked by oriented constraints 1020, 1030, 2030.

The exemplified GUI 100 is a typical CAD interface, having standard menu bars 110, 120, as well as bottom and side toolbars 140, 150. Such menu- and toolbars contain a set of user-selectable icons, each icon being associated with one or more operations or functions, as known in the art.

Some of these icons are associated with software tools, adapted for editing and/or representing the modeled product comprising the objects 10, 20, 30 displayed in the GUI. The software tools in question may for instance be grouped in workbenches. Otherwise put, each workbench comprises a different subset of software tools. In particular, one of these may be an edition workbench, suitable for editing geometrical features of the modeled product. In operation, a designer may for example pre-select one of the displayed objects 10, 20, 30 and then initiate an operation (e.g. change the dimension, color, etc.) by selecting an appropriate icon. For example, typical CAD operations are the modeling of the punching or the folding of a 3D modeled object displayed on the screen.

The edition workbench may further be adapted for displaying data 250 (known as a feature tree) related to the displayed product 200. In the example of FIG. 1A, the data 250 and 3D picture 200 pertain to a simple assembly of three basic shapes 10, 20, 30. Data 250 are displayed in the form of a tree, on the left-hand side of the GUI. The GUI may further show other type of graphic tool 130, for example for indicating the 3D orientation of the objects.

For example, one may use a computer system which is a component of a PLM system equipped with a database, implemented in a computer network. Thus, said computer system may be referred to as a PLM system.

The GUI 100 is run on a computer having a display and memory and being further connected to the computer network, which may benefit from a product data manager (PDM) system. The PDM system allows for the management of numerous documents and data, possibly hierarchically interrelated. A plurality of users may thus work in a collaborative way, on different objects/products, using for example similar local applications and a common environment. For instance, GUIs similar to that identified by reference numeral 100 displayed in FIG. 1A may be run on other computers of the network.

Reverting now to the objects 10, 20, 30 displayed: the object 20 is connected to object 10 via constraint 1020. Similarly, the pairs of objects 10, 30 and 20, 30 are connected via constraints 1030 and 2030, respectively. Said constraints are positioning or offset constraints, having norm values of 55, 160 and 20, respectively. Positive (implicit) or negative sign denotes algebraic values. The constraints may possibly be represented offset to their respective object, as shown, for the sake of clarity. Constraints 1020 and 1030 link respective centers of opposed faces of objects 10, 20 and 10, 30. The constraint 2030 is an offset between respective upper faces of the objects 20, 30.

All the constraints are oriented in this example. In particular, constraint 1020, 1030 and 2030 are respectively oriented from objects 10 to 20, 10 to 30 and 20 to 30. An oriented constraint is here defined as follows: a constraint oriented from a first object to a second object ensures that the first object is not moved provided that all other constraints are solved, when solving the network of constraints. Preferably, it is provided that the absolute position of the first object will not move, which makes the set of objects easier to manage. Accordingly, upon solving the constraints, the second object may move if not disallowed due to other existing oriented constraints. In the case of FIG. 1A, let us suppose that constraints 1020, 1030, and 2030 are already updated (thus solved) and that a user wants to change the norm value of constraint 1030 to the value of 170. He/she may edit the constraint 1030 accordingly (editing the constraints will be detailed below) and subsequently call the constraint solver. By so doing, the object 30 may slide along the direction of the constraint 1030. Indeed, nothing prevent said object 30 to move, not even the constraint 2030 as a vertical offset of - 20 can be maintained when sliding the object 30. Similarly, it would be possible to slightly increase the norm of constraint 1020, e.g. from 55 to 60. By so doing, object 20 would slide to the right of the screen, along the constraint 1020.

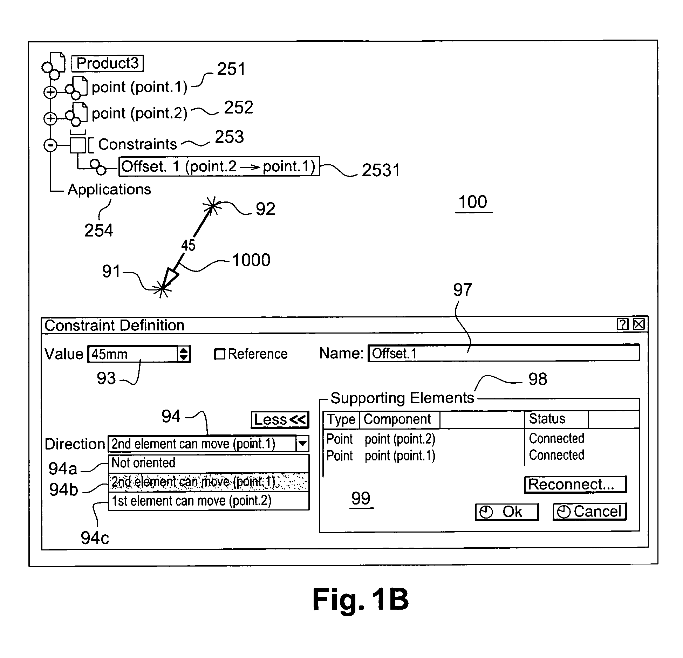

Next, in accordance with the invention, the GUI may allows for dynamic modifications of the orientation of the constraints, as will be described now in reference to FIG. 1B. FIG. 1B shows an example of a screenshot representing a modal window assisting the user in editing constraints.

Only one oriented constraint 1000 is displayed in the GUI 100 (partial view), for the sake of simplicity (a plurality of oriented constraints is likely to be identified, in practice).

Said constraint(s) is (are) oriented from a first object 92 to a second object 91, which are also displayed in the GUI. The constraint ensures that, upon solving the constraints, the first object 92 is not moved. Preferably, it is ensured that the absolute position of the first object 92 will not move, so as to facilitate the update of the whole product 91 - 92. Said oriented constraint is displayed as an arrow 1000, reflecting its orientation. Objects 91 - 92 of the product and the constraint 1000 are preferably displayed as intelligible 3D representations, as in FIG. 1B.

A feature tree 250 might be displayed in the GUI, as in the example of FIG. 1B. The tree 250 indicates a first object ("point.1") 251, a second object ("point.2") 252 and comprises a constraint section or leave 253. Said section, once expanded, indicates the occurrence 2531 of a unique constraint (that is, corresponding to the constraint 1000 displayed), in this example. As indicated, said constraint is oriented from object "point.2" to object "point.1". Objects referred to as "point.1" and "point.2" in the tree correspond to objects displayed in the view under references 91 and 92. It is further indicated that the constraint in question is an offset positioning constraint, as in the previous examples. The feature tree 250 also contains an application section, which could be expanded via a user action.

In this respect, constraints are stored in a database as components in relation to the products and parts or objects linked by the constraints. The feature tree reflects the arrangements of the stored components, and somehow the administrative structure of the product 91 - 92. One should obviously keep in mind that in the case of a complex product, the tree would comprise thousands of leaves, which are not easily apprehensible.

More practical, the invention allows for modifying the product structure by directly selecting the constraint 1000 as displayed in the GUI. As objects 91 - 92 of the product and the constraint 1000 are displayed as intelligible 3D representations, a user only needs finding said constraint in the view and select it in the view, instead of scanning lines of an administrative product structure.

The arrow representing the constraint may for instance be selected by the user thanks to a pointing device (such as a mouse, trackball or touchscreen), which would result in opening a modal window (or wizard) 99.

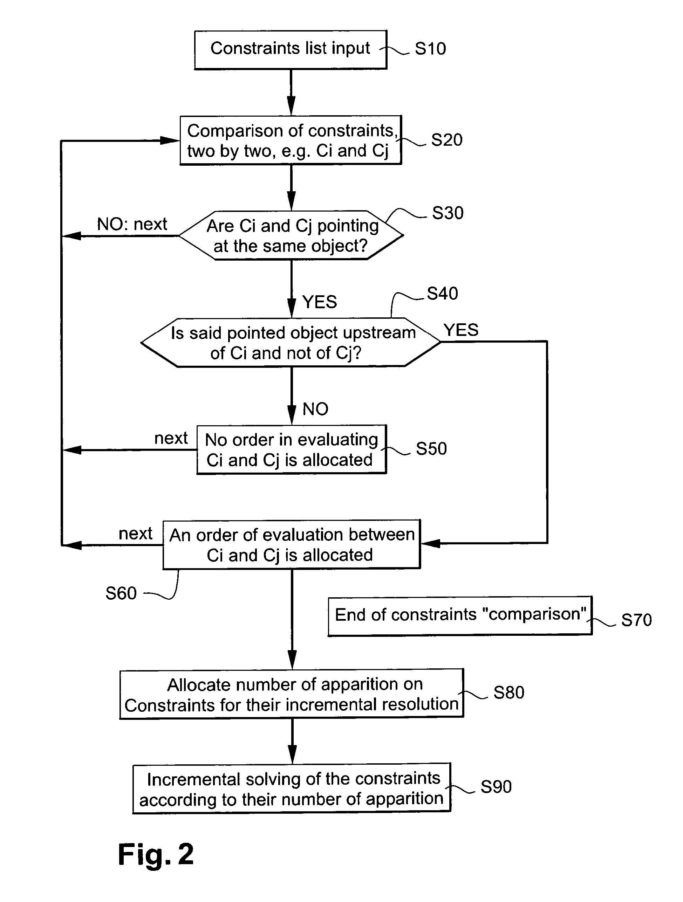

The GUI 100 is accordingly designed for receiving selection of the constraint (for example thanks to a user-pointer) and a request for modification of the orientation of said constraint 1000 (this will be detailed below). After receiving the request, the constraint is modified accordingly, which will amount to identify a new list of constraints as input, see step S10 in reference to FIG. 2.

Said modal window 99 may comprise one or more of the following fields 93 - 98. Each of said fields may be supplemented by suitable widgets or controls, usual in the art, which allow for scrolling/editing/modifying data in the field.

In field 93, the current value of the offset is displayed, which can be changed by the user thanks to a drop down list.

In field 94, a current status or implication of the constraint is displayed to the user, for example "2nd element can move (point. 1)", according to the actual constraint. Thanks to a drop down list, the user may change the constraint into a non-oriented constraint (by selecting the line 94a) or invert the orientation of the constraint (by selecting lines 94b - c). Thus, various ways of modifying the orientation of a constraint are available to a user.

Field 97 display the current name of the constraint, preferably user-modifiable (text box), corresponding to the leave 2531 of the feature tree 250.

The section 98 displays information relative to the linked objects 251, 252, displayed as 91 and 92 in the view.

After edition, the user can press the OK button, which results in modifying the constraint, or the cancel button.

Thus, the modal window 99 allows for modifying the orientation (and possibly other features of the) constraints of the networks.

In a variant, e.g. when the network of constraints is composed of oriented constraints only, the modal window may be more particularly intended for an administrator, and accordingly allows for inverting the constraint orientations but not changing a norm value. Similarly, the functionalities of the modal window may vary according to given access rights, e.g. subjected to authentification.

Next, as will be discussed hereafter, the present invention may apply to a network initially composed of oriented constraints only or to an hybrid network of constraints (that is, containing both oriented and non-oriented constraints). In addition, after modification of the constraints by the user, the network may likely turn into an hybrid network. An hybrid network simplifies collaborative design of interrelated objects.

In this respect, the present inventor has realized that managing both oriented and non-oriented constraints in a single network of constraints can be made possible owing to the definition itself of the oriented and non-oriented constraints. Some comments are in order.

As known in the art, a network of non-oriented constraints may be solved e.g. thanks to a variational constraint solver. In contrast, a network solely composed of oriented constraints may be solved e.g. through a procedural approach. Such implementations are individually known. Now, it has been realized that an hybrid network (comprising both oriented and non-oriented constraints) comprises sub-networks of non-oriented constraints, which can be locally solved thanks e.g. to a variational solver. Next, subsets connected by oriented constraints may benefit from e.g. a procedural approach. For instance, in a brute force method, an algorithm may systematically search all constraint paths and stops when finding one that allows for solving the constraints.

However, such an approach is obviously not the most efficient. In this respect, FIG. 2 shows a flowchart representing possible steps S10 - S90 for efficiently solving the hybrid network. In particular, said steps allows for finding (steps S20 - S80) a sequential order in solving the constraints of the network and then solving (step S90) said constraints

Typically, a user proceeds, in an embodiment of the invention, to modify non-oriented or oriented constraints of the single network, as described above. When updating the constraints, the algorithm acknowledges and identify (step S10) a list of constraints taken as input.

At step S20, the constraints are compared, e.g. two by two. A given pair of constraints is considered, say Ci and Cj.

At step S30, it is tested whether Ci and Cj points at the same object. If not, the algorithm returns to step S20, that is, another pair is considered. If yes, it is tested whether the pointed object is upstream of Ci and not of Cj, keeping in mind the above definition of an oriented constraint.

If not, no relative order in evaluating Ci and Cj is allocated (step S50), else a relative order is given (step S60). The algorithm then proceeds with another pair of constraints (go to step S20).

Upon completing the comparison of constraints (step S70), an order of evaluation of each of the constraints can be given (S80).

Next, an incremental solving of the constraints can be carried out, thanks to the allocated number of apparition (S90). In this respect, one keeps in minds that some of the constraints (non-oriented ones) may be given a same number of apparition, thus forming a sub-network of non-oriented constraints systems which can be locally solved, e.g. thanks to a variational solver.

The above steps are typically implemented using a graph. At the build time, the graph is build. At the run time, the graph is browsed, allowing for solving the constraints. The graph may further advantageously be reduced at the build time, using known techniques of graph reduction.

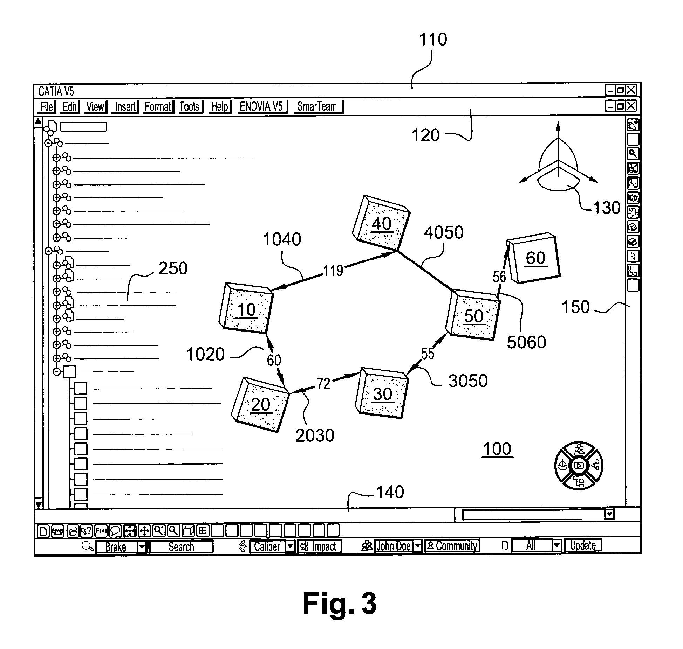

FIG. 3 shows an example of a screenshot of a view of objects linked by both oriented and non-oriented constraints.

As in FIG. 1A, FIG. 2 represents a GUI 100 displaying objects 10 - 60 connected by constraints (constraint *xy* connects objects x and y). In this case, most of constraints 1020 - 4050 are non-oriented constraints, symbolized as double arrows. One of the constrains, constraint 5060 is oriented from object 50 to object 60 (single arrow), implying that object 50 will not move when updating constraint 5060, provided that all other constraints 1020 - 4050 are already updated. Accordingly, first and second teams may independently design the sub-networks 10-50 (or 1020 - 4050, in terms of constraints) and 60 (or 5060), respectively.

Said constraints may be edited/modified by a user. The user typically request via the GUI 100 to modify an oriented or a non-oriented constraint. For example, both oriented 5060 and non-oriented constraints (1020 - 4050) are displayed as respective symbols, the selection of which allows for modifying the constraints. Thus, if the second team updates constraint 5060 (for example modify its norm value), there is no impact on sub-network 1020 - 4050 (if already updated). In any case, only object 60 will move. Collaborative work is thereby facilitated. As said, the subgroup 1020 - 4050 may be locally solved, e.g. according to variational techniques.

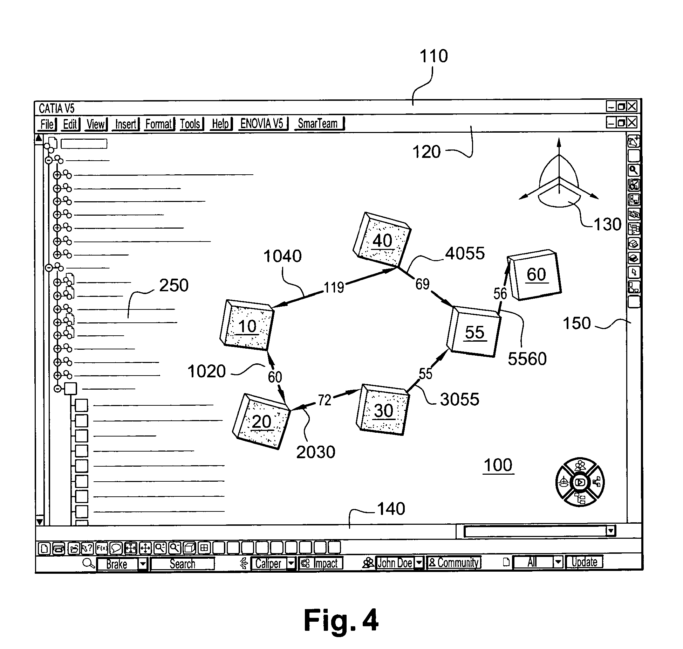

FIG. 4 is an example of a screenshot of a CAD system display representing the view of FIG. 3, wherein some of the constraints have been modified upon user action.

As one of the possible modifications evoke above, a user may request, via the GUI 100, to switch a non-oriented constraint to an oriented constraint and vice-versa. This is exemplified in FIG. 4, wherein non-oriented constraints 3050 and 4050 have been transformed (compared with FIG. 3) into oriented constraints 3055 and 4055, respectively. Here the norms remain unchanged. Yet, the new orientations of the constraints have different outcomes, compared with FIG. 3. Changing the orientations helps (e.g. an administrator) in managing the design tasks in a collaborative context, without editing the administrative structure of the product.

Such a modification may be subjected to verification that the person who requests the change is authorized to do so. This might happen in a collaborative context, wherein an authorized administrator is empowered to modify the orientations of the constraints.

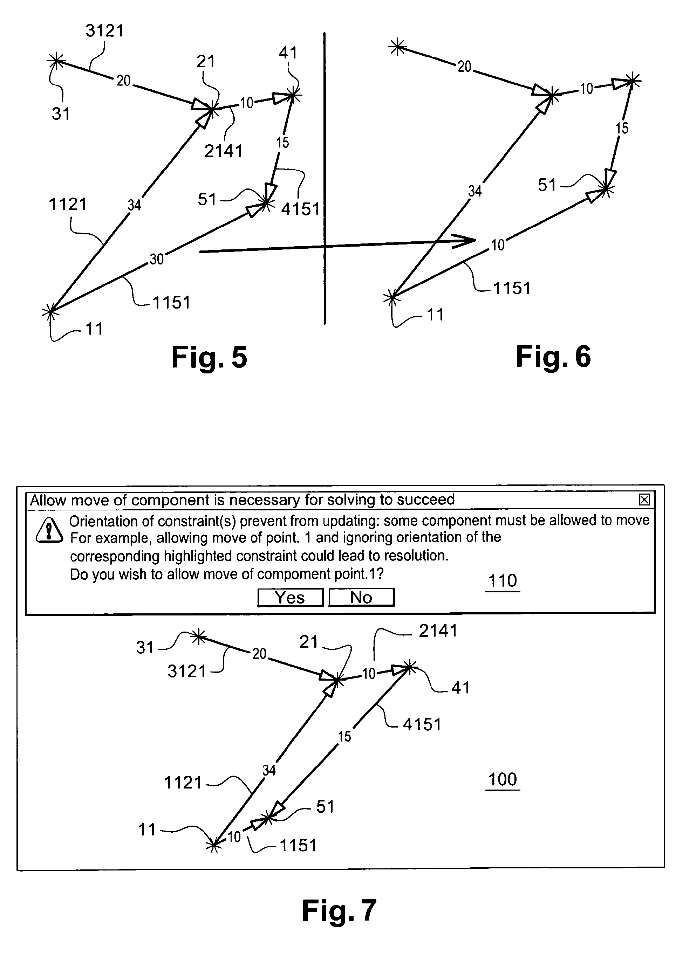

FIGS. 5 and 6 illustrate schematically a user request for changing a value of a constraint by a user.

FIG. 5 shows a subpart of network of constraints, comprising oriented constraints (only) linking objects symbolized as points 11 - 51. Here, the interplay of oriented constraints makes that only point 51 may move upon modifying any norm values of constraints 1121 - 4151.

FIG. 6 shows a new asked offset of 10 for the constraint 1151. Said new asked value makes that there is no solution by moving only point 51. The CAD system may in this case react conveniently by indicating to the user the impossibility of solving the constraints. For example, a window may appear in the screen telling accordingly. The corresponding constraint 1151 may for instance be e.g. dashed, as in FIG. 6, or highlighted.

In an embodiment, the system may however be made more proactive, as will be described in reference to FIG. 7. FIG. 7 is an example of a screenshot representing a modal window 110 popping up in the GUI for assisting the user in solving the network of constraints of FIG. 6.

Here, as an impossibility of solving the constraints was detected, the algorithm proceeds with testing whether said constraints can be solved by modifying one oriented constraint, or a plurality of oriented constraints, if necessary. This can be achieved e.g. by recursively ignoring orientation of one of the constraints until finding the constraint for which the system can be solved. If no constraint is found, pairs of constraints can be tested, etc.

Note that the step of testing may, in a variant, further comprises choosing said one oriented constraint according to one criterion (which may for example correspond to the least relative displacement of objects of the set). Thus, if several constraints are returned, the modification of which would allow for solving, a particular constraint (and then a related object) can be chosen according to this criterion.

Ignoring the orientation of a constraint can be made either temporarily or permanently, which in the latter case amounts to transform the oriented constraint into a non-oriented one. Once said constraint has been found, the system can deduce which object (or point in the example of FIG. 7) is impacted by the critical constraint found. What is analyzed in terms of constraints can thus be translated in terms of objects, which is more natural for a user.

Accordingly, a modal window (also modal dialog) may appear, proposing the user to allow for moving the critical point 41 (corresponding to the "point. 1" evoked in the modal window of FIG. 7), which amounts, in the viewpoint of the algorithm, to return a suggestion for modifying the critical constraint.

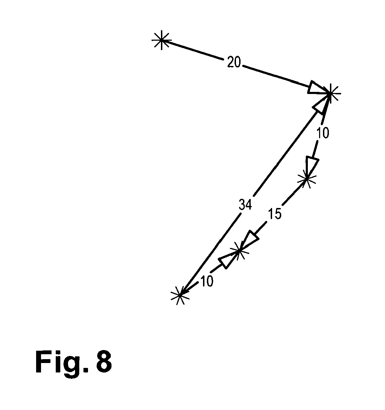

If the user clicks yes, that is, if the user accepts moving point 41, the orientation of the critical constraint 4151 is ignored and the constraints can be solved. The result appears in FIG. 8.

The invention therefore implements, in an embodiment, a CAD expert system assisting the user in view of solving the constraints, making it possible to save a substantial time in a number of situations.

The invention is not limited to the preferred embodiments described in reference to the drawings. Notably, although merely offset positioning constraints have been used to illustrate embodiments of the invention, other types of constraints could be contemplated. Thus, the invention may also apply to angle, parallelism tangency, coincidence, chiral, or topological constraints. Finally, in an embodiment, a constraint according to the invention might be understood as any relation linking two objects.

## Claims

1. A method of computer aided design of a product comprising a set of objects (11 - 51, 91, 92), said method comprising steps of:
- identifying (S10) constraints (1000, 1121 - 4151) linking objects of said set of objects, each of said constraints being oriented from a first object (92) to a second object (91) so as to ensure, upon solving (S90) the constraints, that the first object (92) is not moved provided that all other of said constraints are solved;
- displaying within a graphical user interface (100) of a computer system said oriented constraints (1000, 1121 - 4151);
the method further comprising steps of:
- receiving a user selection and request for modification of the orientation of the displayed oriented constraint (1000, 1121 - 4151); and
- modifying the orientation of one (1000, 4151) of the constraints, according to the user request.

2. The method according to claim 1, wherein the step of modifying the orientation comprises transforming (94a) said one of the constraints into a non-oriented constraint.

3. The method according to claim 1, wherein the step of modifying the orientation comprises inverting (94b, 94c) the orientation of said one of the constraints.

4. The method according to claim 1, 2 or 3, further comprising, after the step of modifying, steps of:
- finding (S20 - S80) a sequential order in solving said constraints, according to the constraints as modified after the step of modifying; and
- solving (S90) the constraints according to the sequential order.

5. The method according to claim 4, wherein the step of finding a sequential order uses a graph.

6. The method according to claim 4 or 5, further comprising steps of:
- if an impossibility of solving said constraints (1121 - 4151) is detected, testing whether said constraints can be solved upon modifying one oriented constraint (4151) amongst the constraints as modified; and
- returning a suggestion (110) for modifying said one oriented constraint (4151).

7. The method according to anyone of claims 1 - 6, wherein the step of returning a suggestion further comprises:
- highlighting in the graphical user interface a symbol representative of said one oriented constraint (4151).

8. The method according to anyone of claims 1 to 7, further comprising, at the step of displaying:
- displaying within the graphical user interface (100) said oriented constraints (1000, 1121 - 4151) and the set of objects (11 - 51, 91, 92) as symbols,
wherein the selection of one of said oriented constraints (1000, 1121 - 4151) or one of a respectively linked first object (92) or second object (91) allows for modifying the constraints.

9. The method according to claim 8, wherein the graphical user interface is further adapted to display a 3D representation of the set of objects.

10. The method according to anyone of claims 1 - 9, wherein the constraints (1020 - 5060) identified at the step of identifying further comprise at least one non-oriented constraint (3050, 4050).

11. The method according to anyone of claims 4 to 10, further comprising, at the step of testing, recursively ignoring the orientation of the oriented constraints (1121 - 4151) as modified.

12. The method according to anyone of claims 4 to 11, wherein the step of testing further comprises choosing said one oriented constraint according to one criterion.

13. The method according to claim 12, wherein said criterion is the least relative displacement of the objects of the set.

14. A computer-readable product for computer aided design of a product comprising a set of objects, the product comprising code means designed for implementing the steps of the method according to any one of claims 1 - 13.

15. A computer system for computer aided design of a product comprising a set of objects, the system comprising means designed for implementing the steps of the method according to any one of claims 1 - 13.
